# EUROPEAN PATENT APPLICATION

(11) **EP 0 924 054 A2**
(43) Date of publication of application: **23.06.1999**
(21) Application number: 98204335.8
(22) Date of filing: 18.12.1998
(51) Int. Cl.: B29C 65/34

(54) **Welding element for thermoplastic parts**

(30) Priority: 18.12.1997 NL 1007845
(71) Applicant: Fokker Special Products B.V., 7900 AB Hoogeveen (NL)
(72) Inventor: Teunissen, Johannes Martines Josephus, 7900 AC Hoogeveen (NL); Offringa, Arnt Rinse, 7908 AT Hoogeveen (NL)
(74) Representative: de Bruijn, Leendert C.

(57) **Abstract**

A welding element for welding parts which are made of thermoplastic material to one another comprises at least one resistance wire which is heatable by means of an electric current. The surfaces of the parts to be welded are placed against one another with the welding element between them, the thermoplastic material of both surfaces is melted by heating by means of the resistance wire, after which the two surfaces are cooled. The welding element comprises a carrier material that contains at least one resistance wire.

## Description

The invention relates to a welding element for welding parts made of a thermoplastic material to one another, which welding element comprises at least one resistance element which is heatable by means of an electric current, wherein the surfaces of the parts to be welded are placed against one another with the welding element between them, the thermoplastic material of both surfaces is melted by heating by means of the resistance element, after which the two surfaces are cooled.

A welding element of this type is disclosed in the article entitled "Thermoplastic composites-rapid processing applications", A.R. Offringa, Composites: Part A27A. 1996, pp 329-336. Elsevier Science Ltd.

A continuous, uniform join between two parts, in particular composite parts, can be obtained by means of a welding element of this type. Such a join offers advantages compared with other methods of joining, such as, for example, by means of ultrasonic welding or by means of a screw or bayonet connection with inserts. For instance, ultrasonic welding is less suitable for continuous welding over relatively long lengths in view of the high level of energy required for this. The use of inserts introduces stress concentrations, which can be undesirable in certain cases.

As already stated, a continuous weld between two thermoplastic parts can be produced by means of a resistance element. In practice, however, it is found that a genuinely continuous weld is not simple to achieve, especially in the case of relatively long weld lengths. Problems are found to arise which have an adverse effect on the uniformity of the weld. Thus, for example, it is possible that locally the melt temperature is not reached or is reached for only too short a period as a consequence of a more substantial cooling.

Problems are also encountered in the production of broad welds. In order to ensure the desired continuity in the width direction of such a weld as well, several resistance elements, e.g. resistance wires, have to be used uniformly alongside one another, which is not simple, especially in the case of relatively long lengths, and can easily give rise to short- circuiting.

The aim of the invention is, therefore, to provide a welding element which is better suited for welds of this type. This is achieved by means of a welding element which comprises a carrier material containing at least one resistance element.

The carrier material of the weld element according to the invention makes it possible to position the resistance element in a manner which can be accurately controlled and to hold it in place between the two surfaces of the thermoplastic parts to be welded to one another. Moreover, a carrier element of this type is easier to handle than the fairly thin resistance elements, e.g. resistance wires themselves, as a result of which work is facilitated and speeded up.

Preferably, the resistance element is accommodated in a carrier material which comprises a fibre composition, for example in the form of a woven or plaited material. The fibre composition can comprise glass fibres.

As has been mentioned, the thermoplastic parts can comprise composite parts containing carbon fibres, embedded in a thermoplastic material. Said thermoplastic matrix material can be, for example, polyphenylene sulphide or polyether-imide. These thermoplastic materials are able to withstand hydraulic fluids which are customary in aviation. A further advantage of polyether-imide is the fairly substantial toughness.

As is known, carbon has a certain degree of electrical conductivity, although this is lower than that of a metal. Nevertheless, the electrical resistance element of the welding material must, for this reason, nevertheless be insulated during welding from parts containing carbon fibres. To this end the fibre composition with resistance element is accommodated between two layers of a fibre material that has been impregnated with a thermoplastic.

Said thermoplastic can likewise be, for example, a polyphenylene sulphide or a polyether-imide.

In the case of composite parts having other fibres than carbon fibres, e.g. glass fibres, such insulation layers are of course not necessary.

As already mentioned, a weld with long longitudinal dimensions can be produced without any problem using the welding element according to the invention. In order also to be able to produce a weld with relatively large transverse dimensions, several resistance elements such as resistance wires can have been accommodated alongside one another in the carrier material.

If such resistance wires are woven or plaited or the like into a fabric, it is ensured that they are well insulated and are parallel with respect to one another. Consequently, the mutual spacing of the resistance wires can without any problem be chosen such that a weld that is uniform in the transverse direction is obtained without local attenuations, such as non-welded inclusions.

In order to produce the weld it must always be ensured that the correct melt temperature can be reached. In practice it is found that problems can arise in this context which are associated with local more substantial cooling, such as at the longitudinal edges of the parts to be welded. In order to be able to ensure a uniform weld even under such conditions, one or more resistance wires can have a smaller diameter than the other resistance wires. Such thinner resistance wires provide a greater evolution of heat than the other wires, as a result of which heat losses are compensated.

In this context it is optionally also possible for at least two resistance wires to be closer to one another than the other resistance wires.

As an alternative, at least one resistance wire can be made of a material that produces more heat than the material of the other resistance wires for a given current.

The material chosen for the resistance wires is preferably Isazin, which has a homogeneous character and consequently has a beneficial effect on the homogeneity of the weld.

The resistance wire is connected in the customary manner at both ends to the poles of a current source. This means that the workpiece must be accessible at both ends. In some cases this presents problems, for example when the particular end to be connected is inside an assembly jig. According to the invention, a weld element according to the invention can be used even in such cases if each resistance wire is accommodated in loop form in a strip of carrier material such that both ends of each wire are located at one and the same end of the strip.

With a weld element of this type both poles of a current source can be connected at one and the same end of the welding element and specifically to the respective two ends of each resistance wire.

The resistance wires may cross each other or may be knitted.

Although as an example of a resistance element a resistance wire is addressed, other embodiments are possible as well. For instance, the resistance element may comprise a sheet type material, provided with separate slits, and stretched transverse with respect to those slits (grid). This material as well may comprise Isazin.

The invention is also related to a method for mutually welding of parts by means of a welding element, which welding element comprises at least one resistance element which is heatable by means of an electric current, wherein the surfaces of the parts to be welded are placed against one another with the welding element between them, the thermoplastic material of both surfaces is melted by heating by means of the resistance element, after which the two surfaces are cooled, comprising the steps of measuring the temperature at a spot of the load, measuring the power fed to the resistance element, registering the temperature and the power fed in, programming a process thereon the basis of the registered temperature and the registered power, and manufacturing a next weld on the basis of data stored in the programm processor.

As soon as in this way the appropriate parameters, such as the current and voltage as a function of time, have been defined for a certain weld, subsequently corresponding welds may be applied automatically in an identical way.

The invention will be explained in more detail below with reference to an illustrative embodiment shown in the figures.

Figure 1 shows two composite parts to be welded together, with a welding element according to the invention, provided with a resistance wire.

Figure 2 shows the parts according to Figure 1 in cross-section.

Figure 3 shows the step in which the composite parts are fixed to one another.

Figures 4 and 5 show variants of the welding element.

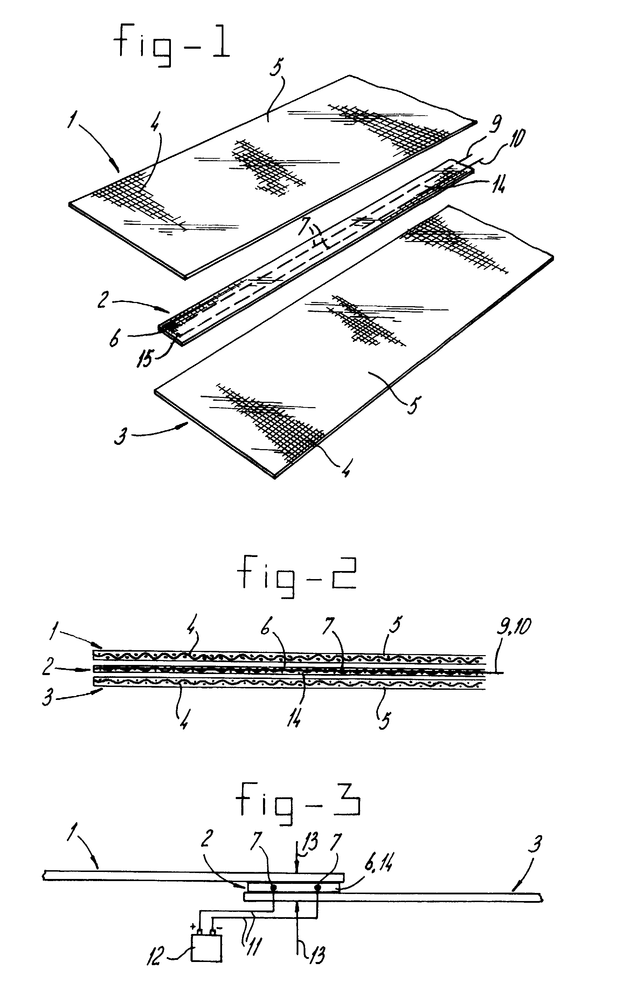

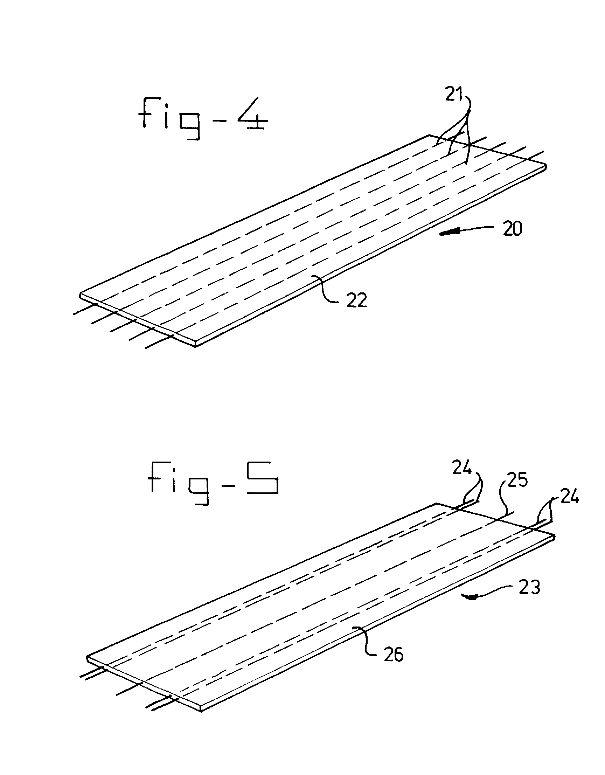

The composite parts 1 shown in Figures 1 and 2 consist of a fibre material 4, for example a fabric, that has been impregnated with a thermoplastic matrix material 5. The second composite part 3 has a corresponding composition.

The two composite parts 1, 3 must be fixed to one another by causing the thermoplastic matrix material 5 to melt, to which end a welding element 2 is provided. Said welding element likewise consists of a fibre material 6 such as a fabric, in which a number of metal wires 7 have been accommodated. Said metal wires 7 run through the welding element 2 a short distance apart, but without touching one another. The fibre material 6 and the metal wires 7 are likewise incorporated in a thermoplastic matrix material 14.

At one end 15 of the welding element 2 the metal wires 7 are fixed to one another in a pair. The connections 9, 10 for a source of electric current are therefore advantageously at one and the same end of the welding element.

As is shown in Figure 3, the composite parts 1, 3, with the welding element 2 placed between them, are pressed on to one another by means of pressure forces as indicated diagrammatically by the arrows 13. The electrical leads 11, which connect the resistance wires 7 to a current source 12, are connected to the electrical connections 9, 10.

The metal wires 7, which are preferably made of the homogeneous material Isazin, are heated by this means, as a result of which both the matrix material 14 of the welding element 2 and the matrix material 5 of the composite parts 1, 2 melts.

As soon as the matrix material has melted sufficiently, the current supply is switched off and the thermoplastic matrix material sets, the pressure force 13 being maintained.

After complete cooling, a continuous weld is obtained which has the desired homogeneity both in the longitudinal and in the transverse direction of the welding element 2.

The weld can, for example, have a length dimension of the order of magnitude of 1 or a few metres and a transverse dimension of a few centimetres.

As shown in Figure 4, the welding element 20 can have several, five in the example, resistance wires 21, accommodated in a carrier material 22.

The variant in Figure 5 shows a welding element 23 which likewise has five resistance wires 23, 24 in a carrier material 26. The resistance wires 24 located close to the longitudinal edges of the welding element 23 have a relatively small mutual spacing. As a result, the relatively rapid cooling at the longitudinal edges can be counteracted such that a weld that is more regular in the transverse direction is produced.

## Claims

1. Welding element (2) for welding parts (1, 3) made of a thermoplastic material (5) to one another, which welding element (2) comprises at least one resistance element (7) which is heatable by means of an electric current, wherein the surfaces of the parts (1, 3) to be welded are placed against one another with the welding element (2) between them, the thermoplastic material (5) of both surfaces is melted by heating by means of the resistance element (7), after which the two surfaces are cooled, characterised in that the welding element (2) comprises a carrier material (6) that contains at least one resistance element (7).

2. Welding element (2) according to Claim 1, wherein the resistance element (7) is accommodated in a carrier material (6) that comprises a fibre composition.

3. Welding element (2) according to Claim 2, wherein the fibre composition comprises a woven or plaited material.

4. Welding element (2) according to Claim 1, 2 or 3, wherein the carrier material comprises glass fibres.

5. Welding element (2) according to Claim 1, 2, 3 or 4, wherein the resistance wire (7) is made of Isazin.

6. Welding element (2) according to Claim 1, 2, 3, 4 or 5, wherein the carrier material (6) is embedded in a thermoplastic matrix material.

7. Welding element (2) according to Claim 2, 3, 4 or 5, wherein the fibre composition with resistance element (7) is accommodated between two layers of fibre material.

8. Welding element (2) according to Claim 7, wherein the layers of fibre material are each embedded in a thermoplastic matrix material.

9. Welding element (2) according to one of the preceding claims, wherein the thermoplastic is polyphenylene sulphide (PPS).

10. Welding element (2) according to one of the preceding claims, wherein the thermoplastic is polyether-imide (PEI).

11. Welding element (2) according to one of the preceding claims, wherein several resistance elements (7) are accommodated alongside one another in the carrier material (6).

12. Welding element according to any of the preceding claims, wherein the resistance element comprises a resistance wire (7).

13. Welding element (2) according to Claim 12, wherein one or more resistance wires (7) have a smaller diameter than the other resistance wires (7).

14. Welding element (2) according to Claim 12 or 13, wherein at least two resistance wires (24) are closer to one another than the other resistance wires (25).

15. Welding element (2) according to Claim 12 or 13, wherein at least one resistance wire (7) is made of a material that produces more heat than the material of the other resistance wires (7) for a given current.

16. Welding element (2) according to one of claims 12-15, wherein each resistance wire (7) is accommodated in a loop form in a strip of carrier material, such that both ends (9, 10) of each wire are located at one and the same end of the strip.

17. Welding element according to any of claims 12-16, wherein several resistance wires crossing each other are provided.

18. Welding element according to any of claims 1-11, wherein the resistance element is of a sheet-type.

19. Welding element according to claim 18, wherein the resistance element comprises a sheet-type material provided with separated slits, and stretched transverse with respect of the slits (grid).

20. Use of a welding element according to one of the preceding claims, comprising accommodating the welding element (2) between two parts (1, 3) made of a thermoplastic material (5), pressing the package made up of the parts and the welding element (2) on to one another, heating each resistance element (7) in the welding element (2) by connecting it to a current source (12), causing the thermoplastic material (5) of the parts (1, 3) to melt, at least close to each resistance wire (7), and allowing said material (5) to set with the formation of a weld.

21. Use of a welding element according to Claim 20, wherein the parts (1, 3) comprise a composite of a fibre material (4) and a thermoplastic matrix material (5), comprising pressing the package made up of the composite parts (1, 3) and the welding element (2) onto one another, heating each resistance element (7) of the welding element (2) by connecting it to a current source, causing the thermoplastic matrix material (5) of the parts (1, 3) to melt, at least close to each resistance wire (7), and allowing the matrix material (5) to set with the formation of a weld.

22. Use of a welding element according to Claim 20 or 21, comprising the step of making the power supplied to the resistance element increasing linearly or steplike, keeping the power constant after a certain power has been reached, and decreasing the power to zero.

23. Method for mutually welding of parts (1, 3) by means of a welding element (2) according to one of claims 1-19, which welding element comprises at least one resistance element (7) which is heatable by means of an electric current, wherein the surfaces of the parts (1, 3) to be welded are placed against one another with the welding element (2) between them, the thermoplastic material (5) of both surfaces is melted by heating by means of the resistance element (7), after which the two surfaces are cooled, comprising the steps of measuring the temperature at a spot of the weld, measuring the power fed to the resistance element, registering the temperature and the power fed in, programming a processor on the basis of the registered temperature and the registered power, and manufacturing a next weld on the basis of data stored in the programmed processor.

24. Method according to claim 23, comprising the step of regulating the power in dependence of the nature and/or the dimensions of the area to be welded.
